# EUROPEAN PATENT APPLICATION

(11) **EP 2 186 418 A1**
(43) Date of publication of application: **19.05.2010**
(21) Application number: 08790532.9
(22) Date of filing: 29.08.2008
(51) Int. Cl.: A23F 3/16, A23L 2/52, A23L 2/39

(54) **INSTANT POWDER DRINK**

(30) Priority: 30.08.2007 JP 2007224618
(71) Applicant: Kao Corporation, Chuo-Ku Tokyo 103-8210 (JP)
(72) Inventor: FUKUDA, Masahiro, Tokyo 131-8501 (JP); ITAYA, Eri, Tokyo 131-8501 (JP); TAKAHASHI, Hirokazu, Tokyo 131-8501 (JP); KUSAKA, Ryo, Tokyo 131-8501 (JP)
(74) Representative: HOFFMANN EITLE
(86) International application number: PCT/JP2008/002378
(87) International publication number: WO 2009/028211

(57) **Abstract**

An instant beverage powder with non-polymer catechins contained at high concentration has improved flavor and taste owing to reductions in bitterness and astringency, and also provides improved flavor and taste and improved stability in external appearance after reconstituted into a beverage. The instant beverage powder contains the following ingredients (A) and (B) :
(A) from 0.5 to 20.0 wt% of a purified product of green tea extract, said purified product being obtained by purifying the green tea extract in a mixed solution of ethanol and water at a weight ratio of from 99/1 to 75/25, and
(B) from 0.01 to 10.0 wt% of a hydroxycarboxylic acid or a lactone, or a salt thereof.

The content of non-polymer catechins in the instant beverage powder is from 0.5 to 15.0 wt%.

## Description

### Field of the Invention

This invention relates to an instant beverage powder containing high concentrations of non-polymer catechins.

### Background of the Invention

Catechins are reported to have physiological effects, such as a cholesterol-suppressing effect and an amylase activity-inhibiting effect (Patent Documents 1 and 2). In order for such effects to materialize, a large amount of catechins need to be digested in a convenient way. Thus there has been a demand for a technology by which high concentrations of catechins can be added to a beverage. As an example of such technologies, there is a method which uses a concentrated green tea extract, thereby enabling dissolved catechins to be added to a beverage (Patent Documents 3 to 5).

However, when the catechins obtained by dissolving such a concentrated green tea extract into a beverage are digested in high concentrations, there is a tendency such that the taste of catechins not only grows bitter and astringent, but also gives rise to more increasing bitterness, astringency, harshness and coarseness due to the presence of a plenty of other components contained in the concentrated green tea extract.

In the meantime, there are other foods such as a health food making it easier to digest catechins by adding a low-calorie sweetener to tea leaf powder instead of a green tea extract (Patent Document 6), and a food and drink in which bitterness and astringency alike are reduced effectively by removing caffeine along with adding cyclodextrin to catechins (Patent Document 7). These foods, however, have a shared drawback such that the bitterness and astringency are almost impossible to mitigate satisfactorily, merely by adding a sweetener thereto and removing caffeine therefrom.

There are also other foods and drinks proposed so far, such as an instant tea obtained by spray-drying tea extract solutions with cyclodextrin added thereto (Patent Document 8) and an instant beverage powder produced by adding cyclodextrin to tea extract solutions to reduce oxalic acid contained in the tea extract solutions (Patent Document 9). However, these foods and drinks tend to sacrifice their freshness, even though their bitterness and astringency are mitigated owing to the incorporation of cyclodextrin. There are also other methods yet, such as a method in which, after an extract solution from tea leaves is concentrated through a reverse osmosis membrane, powdered tea leaves are added, followed by freeze drying, and a method that upon conducting vacuum freeze drying, bubbles are mixed at the time of freezing to improve the solubility (Patent Documents 10 and 11). However, these methods are still not enough to control bitterness and astringency.

Patent Document 1: JP-A-60-156614
Patent Document 2: JP-A-3-133928
Patent Document 3: JP-A-59-219384
Patent Document 4: JP-A-4-20589
Patent Document 5: JP-A-61-130285
Patent Document 6: JP-A-10-150950
Patent Document 7: JP-A-10-4919
Patent Document 8: JP-A-2000-253820
Patent Document 9: JP-B-3863482
Patent Document 10: JP-A-6-121638
Patent Document 11: JP-A-6-296457

### Summary of the Invention

This invention provides an instant beverage powder containing the following ingredients (A) and (B):
(A) from 0.5 to 20.0 wt% of a purified product of green tea extract, the purified product being obtained by purifying a green tea extract in a mixed solution of ethanol and water at a weight ratio of from 99/1 to 75/25, and
(B) from 0.01 to 10.0 wt% of a hydroxycarboxylic acid or a lactone, or a salt thereof,
wherein from 0.5 to 15.0 wt% of non-polymer catechins are contained in the instant beverage powder.
This invention also provides a process for producing an instant beverage powder, which includes a step of powderizing a purified product of green tea extract, said purified product being obtained by purifying the green tea extract in a mixed solution of ethanol and water at a weight ratio of from 99/1 to 75/25, in accordance with at least one granulating method selected from spray-drying, freeze-drying, fluidized-bed granulation and tumbling granulation.

### Detailed Description of the Invention

The instant beverage powder according to the present invention contains non-polymer catechins in high concentrations, are reduced in bitterness and astringency, and are good in flavor and taste, and further, can retain its flavor and taste and stability in external appearance even after reconstituted into the beverage.

As a result of a study on a relationship between components contained in a green tea extract and bitterness and astringency, the present inventors found that an instant beverage powder, which is reduced in bitterness and astringency and is excellent in flavor and taste and moreover can retain its flavor and taste and stability in external appearance over a long time even after reconstituted into a beverage, can be obtained by combining specific ingredient(s) with a purified product of green tea extract as obtained by purifying the green tea extract in a mixed solution containing ethanol and water at a particular ratio.

According to the present invention, provided is an instant beverage powder which is reduced in bitterness and astringency and is excellent in flavor and taste and moreover can retain its flavor and taste and stability in external appearance over a long time even after reconstituted into a beverage. The instant beverage powder according to the present invention is palatable, and makes it possible to readily intake a large amount of non-polymer catechins.
According to the production process of the present invention, on the other hand, an instant beverage powder which exhibits such effects can be conveniently produced.

The term "instant beverage powder" as used herein has a concept that encompasses instant green-tea beverage powder, instant black-tea beverage powder, instant oolong-tea beverage powder, instant non-tea beverage powder, and instant carbonated beverage powder. The term "instant green-tea beverage powder" means an instant beverage powder containing a green tea extract and/or a green tea flavor, and the term " instant black-tea beverage powder" means an instant beverage powder containing a black tea extract and/or a black tea flavor. The term "instant oolong-tea beverage powder" means an instant beverage powder containing a oolong tea extract and/or a oolong tea flavor, and the term "instant non-tea beverage powder" means an instant beverage powder of the near water type intended to permit the ingestion of catechins. Further, the term "instant carbonated beverage powder" means an instant beverage powder that produces carbon dioxide gas when dissolved in a liquid. An instant carbonated beverage powder can also be any one of an instant green-tea beverage powder, instant black-tea beverage powder, instant oolong-tea beverage powder or instant non-tea beverage powder.

The instant beverage powder in the present invention is comprised of a powdery concentrate composition containing non-polymer catechins, and is taken as a reconstituted beverage by dissolving it in a liquid such as deionized water or hot water. The instant beverage powder of the present invention may desirably be taken as a reconstituted beverage containing from 0.01 to 0.5 wt% of non-polymer catechins . For this purpose, the content of non-polymer catechins in the instant beverage powder is set at from 0.5 to 15.0 wt% in the present invention, but may be set preferably at from 0.5 to 12.0 wt%, more preferably at from 0.6 to 10.0 wt%, even more preferably at from 0.6 to 5.0 wt%. The setting of the content of non-polymer catechins within the above-described range makes it possible to readily digest a large amount of non-polymer catechins, and moreover, to expect the physiological effects of non-polymer catechins. The term "non-polymer catechins" as used herein is a generic term, which collectively encompasses non-epi-form catechins such as catechin, gallocatechin, catechin gallate and gallocatechin gallate, and epi-form catechins such as epicatechin, epigallocatechin, epicatechin gallate and epigallocatechin gallate. The concentration of non-polymer catechins is defined based on the total amount of the above-described eight non-polymer catechins.

Further, the non-polymer catechins include gallate forms consisting of epigallocatechin gallate, gallocatechin gallate, epicatechin gallate and catechin gallate; and non-gallate forms consisting of epigallocatechin, gallocatechin, epicatechin and catechin. Because the gallate forms as ester-type non-polymer catechins are severe in bitterness, the percentage of gallate forms in the non-polymer catechins based on the non-polymer catechins in the instant beverage powder according to the present invention, that is, the percentage of gallate forms in the non-polymer catechins may be set preferably at from 5 to 55 wt%, more preferably at from 8 to 50 wt%, even more preferably at from 10 to 50 wt%. The setting of the percentage of gallate forms within the above-described range makes it possible to sufficiently control bitterness.

Suchnon-polymer catechins are contained in a green tea extract. As green tea, tea leaves prepared from tea leaves available from the Genus Camellia, for example, C. *sinensis,* C. *assamica,* the Yabukita variety, or a hybrid thereof can be mentioned. Such prepared tea leaves include green teas such as *sencha* (middle-grade green tea), *bancha* (coarse green tea), *gyokuro* (shaded green tea), *tencha* (powdered tea) and *kamairicha* (roasted tea).

Green tea extracts usable in the present invention include a green tea extract solution obtained from green tea, a concentrate of green tea extract as obtained by drying or concentrating the green tea extract solution, a purified product of green tea extract solution or the concentrate of green tea extract, and mixtures thereof. It is to be noted that the green tea extract solution can be obtained by adopting a known method such as stirring extraction. It is also possible to make combined use of boiling deaeration or an extraction method which is conducted while bubbling an inert gas such as nitrogen gas to eliminate dissolved oxygen, that is, under a so-called non-oxidizing atmosphere. The concentrate of green tea extract is one obtained by concentrating a green tea extract obtained from green tea with hot water or a water-soluble organic solvent, and can be produced, for example, by the method described in JP-A-59-219384, JP-A-4-20589, JP-A-5-260907, JP-A-5-306279 or the like. As the concentrate of green tea extract, a commercially-available product may also be used. Examples include "POLYPHENONE" (Mitsui Norin Co., Ltd.), "TEAFURAN" (ITOEN, LTD.), "SUNPHENON" (Taiyo Kagaku Co., Ltd.), and the like. In the present invention, it is preferred to use, as a green tea extract, a concentrated green tea extract, said extract containing non-polymer catechins at from 25 to 90 wt%, with from 30 to 90 wt% being more preferred, in terms of dry weight. As the form of the green tea extract, a liquid, slurry, semi-solid or solid can be mentioned, for example. Of these, a slurry, semi-solid or solid is preferred from the viewpoint of dispersibility in a mixed solution of ethanol and water.

The ingredient (A) in the instant beverage powder according to the present invention is one obtained by purifying the above-described green tea extract in a mixed solution containing ethanol and water at a particular ratio, and as its form, a liquid, slurry, semi-solid or solid can be mentioned, for example. As a purification method of the green tea extract, a method that removes precipitates formed by suspending the green tea extract in the mixed solution of ethanol and water and then distills off the solvent or a like method can be mentioned, although a method that subjects the green tea extract to treatment in contact with activated carbon and acid clay or activate clay in a mixed solution of ethanol and water is preferably adopted. By the purification, it is possible to remove turbidity from the green tea extract and also to decrease the amount of caffeine in the green tea extract.

Although the weight ratio of ethanol to water in the mixed solution is from 99/1 to 75/25, it may be preferably from 97/3 to 90/10, more preferably from 95/5 to 91/9, even more preferably from 95/5 to 92/8. This weight ratio makes it possible to reduce bitterness and astringency, to bring about an excellent balance between sweetness and sourness, and further, to impart refreshing attributes.

No particular limitation is imposed on the method for dispersing the green tea extract in the mixed solution of ethanol and water, insofar as the weight ratio of ethanol to water falls within the range of from 99/1 to 75/25 upon final treatment of the green tea extract. For example, ethanol may be added after dissolution of the green tea extract in water such that the weight ratio of ethanol to water is brought into the range of from 99/1 to 75/25. As analternative, watermaybe gradually added subsequent to suspension of the green tea extract in ethanol such that the weight ratio of ethanol to water is adjusted to the above-described ratio. The amount (in terms of solids) of the green tea extract to be used may be preferably from 10 to 40 weight parts, more preferably from 10 to 30 weight parts relative to 100 weight parts of the mixed solution of ethanol and water from the standpoint of working efficiency.

No particular limitation is imposed on activated carbon usable in the above-described purification step insofar as it is generally used on an industrial level. Usable examples include commercially-available products such as "ZN-50" (product of Hokuetsu Carbon Industry Co., Ltd.), "KURARAY COAL GLC", "KURARAY COAL PK-D" and "KURARAY COAL PW-D" (products of Kuraray Chemical K.K.), and "SHIROWASHI AW50", "SHIROWASHI A", "SEIROWASHI M" and "SHIROWASHI C" (products of Takeda Pharmaceutical Company Limited). The pore volume of the activated carbon may be preferably from 0.01 to 0.8 mL/g, more preferably from 0.1 to 0.7 mL/g. Concerning the specific surface area, on the other hand, from 800 to 1,300 m²/g is preferred, with from 900 to 1,200 m²/g being more preferred. It is to be noted that these physical values are those determined by the nitrogen adsorption method. The amount of the activated carbon to be used may be preferably from 0.5 to 5 weight parts, more preferably from 0. 5 to 3 weight parts relative to 100 parts by weight of the mixed solution of ethanol and water.

The acid clay and activated clay usable in the above-described purification step both contain, as general chemical components, SiO₂, Al₂O₃, Fe₂O₃, CaO, MgO, etc., and those having SiO₂/Al₂O₃ ratios of from 3 to 12, preferably from 4 to 9 are pre f erred. Also preferred are those which have compositions containing from 2 to 5 wt% of Fe₂O₃, from 0 to 1.5 wt% of CaO and from 1 to 7 wt% of MgO. Activated clay is obtained by treating a naturally-mined acid clay (montmorillonite clay) with a mineral acid such as sulfuric acid, and is a compound having a porous structure of large specific surface area andadsorptivecapacity. Further treatment of acid clay with an acid is known to change its specific surface area such that its decolorizing ability is enhanced and its physical properties are modified. The specific surface areas of acid clay and activated clay may preferably be from 50 to 350 m²/g although they vary depending on the degrees or the like of the acid treatment. Further, their pH (5 wt% suspensions, 25°C) may be preferably from 2.5 to 8, more preferably from 3.6 to 7. As the acid clay and activated clay, commercially-available products may be used. For example, "MIZUKA-ACE #600" (product of Mizusawa Industrial Chemicals, Ltd.) can be used as the acid clay.

The amount of acid clay or activated clay to be used may be preferably from 2.5 to 25 weight parts, more preferably from 2.5 to 15 weight parts relative to 100 weight parts of the mixed solution of ethanol and water. The adoption of such a use amount makes it possible to efficiently remove caffeine, and further to reduce the cake resistance in the filtration step and hence to improve the working efficiency. The ratio (weight ratio) of the activated carbon to the acid clay or activated clay may be preferably from 1 to 10, more preferably from 1 to 6 of the acid clay or activated clay to 1 of the activated carbon.

The purified product of green tea extract can be obtained, for example, by bringing the green tea extract, in a state that it is dispersed in a mixed solution of ethanol and water, into contact with activated carbon and acid clay or activated clay. It is to be noted, however, that no particular limitation is imposed on the order of addition of the respective ingredients. There can be mentioned, for example, (1) a method that includes adding the green tea extract to the mixed solution of ethanol and water and bringing the resulting mixture into contact with activated carbon and then with acid clay or activated clay, (2) a method that includes adding the green tea extract to the mixed solution of ethanol and water and bringing the resulting mixture into contact with acid clay or activated clay and then with activated carbon, (3) a method that includes adding acid clay or activated clay to the mixed solution of ethanol and water, adding the green tea extract to the resulting mixture, and then adding activated carbon and (4) a method that includes adding activated carbon to the mixed solution of ethanol and water, adding the green tea extract to the resulting mixture, and then adding acid clay or activated clay. The purification treatment can be conducted by sequentially adding the respective ingredients as described above. It is, however, preferred to conduct filtration between the respective steps. Further, the green tea extract may be added in two or more portions, and in such a case, filtration may be conducted after every addition of the green tea extract.

The contact treatment of the dispersion of green tea extract with the activated carbon and the acid clay or activated clay may be conducted by any method such as a batch method or a continuous treatment method making use of a column. In general, it is possible to adopt a method that includes adding powdery activated carbon to the dispersion and conducting stirring to have caffeine selectively adsorbed and then removing the caffeine by filter operation to obtain a filtrate, a method that includes having caffeine selectively adsorbed by continuous treatment through a column packed with granular activated carbon, or a like method. After the contact with the activated carbon and the acid clay or activated clay, the activated carbon and the acid clay or activated clay are removed, and the dispersion of green tea extract is then subjected to reduced-pressure distillation, concentration operation or the like to remove ethanol from the system.

The purified product of green tea extract can be obtained as described above, and the ratio of caffeine to non-polymer catechins (caffeine/non-polymer catechins) in the purified product of green tea extract may be, in terms of weight ratio, from 0.0001 to 0.16, more preferably from 0.001 to 0.15, more preferably from 0.01 to 0.14, even more preferably from 0.05 to 0.13. The adoption of such a ratio provides well-balanced flavor and taste when the instant beverage powder of the present invention is reconstituted into a beverage, and further, makes it possible to expect sufficient physiological effects.

As the purified product of green tea extract in the present invention, one having a percentage of gallate forms lowered by tannase treatment can be used. The term "tannase treatment" as used herein means to treat with an enzyme having tannase activity, which can be, for example, tannase obtainable by culturing a tannase-producing fungus of the *Aspergillus, Penicillium* or *Rhizopus genus.* Preferred is tannase available from *Aspergillus oryzae.* This treatment with tannase can also be conducted in the production stage of either the green tea extract solution containing non-polymer catechins or the purified product of green tea extract. Tannase may preferably be added such that its amount falls within a range of from 0.5 to 10 wt% based on the non-polymer catechins in the green tea extract solution or the concentrate of green tea extract. The temperature of the tannase treatment may be preferably from 15 to 40°C at which its enzyme activity is available, with from 20 to 30°C being more preferred. At the time of the tannase treatment, the pH (25°C) may be preferably from 4 to 6 at which its enzyme activity is available, with from 4.5 to 6 being more preferred, and from 5 to 6 being even more preferred.

In the tannase treatment, it is preferred to hold the green tea extract solution or the concentrate of green tea extract at from 20 to 50°C, with from 20 to 40°C being more preferred, after the addition of the enzyme having tannase activity until the percentage of gallate forms in the non-polymer catechins reaches from 1 to 60 wt%. In this case, the percentage of gallate forms in the non-polymer catechins may be adjusted preferably to from 5 to 55 wt%, more preferably to from 5 to 50 wt%. In the control of the percentage of gallate forms by the tannase treatment, it is preferred to determine the end point of the reaction based on the level of pH of the green tea extract solution or the purified product of green tea extract, and the pH (25°C) may be preferably from 3 to 6, more preferably from 3.5 to 5.5.
Subsequently, the temperature is raised as promptly as possible to from 45 to 95°C, preferably from 75 to 95°C such that the tannase is inactivated to terminate the reaction. As a result, the bitterness and astringency are sufficiently reduced, thereby making it possible to obtain a purified product of green tea extract having still better flavor and taste. By the inactivation treatment of the tannase, any subsequent reduction in the percentage of gallate forms can be avoided, thereby making it possible to conveniently obtain a purified product of green tea extract with a desired percentage of gallate forms.

The content of gallic acid formed by the tannase treatment may preferably be 0.6 wt% or lower based on the total weight of the purified product of green tea extract from the viewpoint of a reduction in astringency. Gallic acid is contained a lot especially in fermented tea, but is contained little in non-fermented tea. The preferred content of gallic acid may be from 0.01 to 0.6 wt%, with from 0.05 to 0.6 wt% being more preferred.

The concentration of non-polymer catechins in the solids of the purified product of green tea extract may be preferably from 40 to 100 wt%, more preferably from 50 to 100 wt%, because good flavor and taste are provide when impurities are slight.

The amount of the ingredient (A) to be added is from 0.5 to 20.0 wt% based on the total weight of the instant beverage powder, but may be preferably from 1.0 to 10.0 wt%, more preferably from 1.0 to 8.0 wt%. By controlling the amount of the ingredient (A) in the above-described range, non-polymer catechins can be set at an optimal concentration when reconstituted into a beverage. The purified product of green tea extract, as the ingredient (A), may preferably be one obtainable by powderizing the purified product of green tea extract obtained by the above-described method. As to the powderization method of the purified product of green tea extract, a detailed description will be made in the below-described production process of the instant beverage powder.

The instant beverage powder according to the present invention also contains a hydroxycarboxylic acid or its lactone or a salt thereof added as the ingredient (B). One having 3 to 6 carbon atoms is preferred as the ingredient (B). Specific examples include hydroxy monocarboxylic acids such as ascorbic acid, erythorbic acid, gluconic acid and lactic acid, and their lactones; and hydroxy polycarboxylic acids such as citric acid, tartaric acid and malic acid. They can be used either singly or in combination. Among these, the inclusion of a hydroxy monocarboxylic acid or its lactone (especially, ascorbic acid) ispreferred, with its combined use with a hydroxy polycarboxylic acid being more preferred, from the standpoints of pH adjustment and oxidation-preventing effect. When a hydroxy monocarboxylic acid or its lactone and a hydroxy polycarboxylic acid are used in combination, the combination of ascorbic acid and citric acid or the combination of ascorbic acid and malic acid is preferred, with the combination of ascorbic acid and citric acid being more preferred from the viewpoint of adequate sourness. Examples of the salt include alkali metal salts, alkaline earth metal salts and ammonium salts. Of these, alkali metal salts are preferred, with the sodium salt and potassium salt being more preferred.

The total amount of the ingredient (B) to be added is from 0.01 to 10.0 wt% based on the total weight of the instant beverage powder, with from 0.1 to 8.0 wt% being more preferred, and from 0.5 to 6 wt% being still more preferred. A concentration of the ingredient (B) equal to or higher than 0.01 wt% can provide a reconstituted beverage with reduced bitterness and astringency and adequate sourness, and moreover, can provide the non-polymer catechins with better storage stability. Aconcentrationof the ingredient (B) equal to or lower than 10.0 wt%, on the other hand, can provide the beverage powder with adequate hue, and more, can provide adequate sourness and astringency when formulated into a reconstituted beverage.
When a hydroxy monocarboxylic acid or its lactone and a hydroxypolycarboxylic acid are used in combination, the amount of the hydroxy polycarboxylic acid to be added may be preferably from 0.5 to 3 times as much as the total weight of the hydroxy monocarboxylic acid or its lactone, and from the viewpoints of reductions in bitterness and astringency and a balance between sweetness and sourness, from 1 to 2.5 times is preferred, with from 1.5 to 2.3 times being more preferred.

When the instant beverage powder according to the present invention is an instant green-tea beverage powder, an instant black-tea beverage powder or an instant oolong-tea beverage powder, it is preferred, from the viewpoint of the taste of green tea, black tea or oolong tea, to add an extract of such tea, for example, a dried product of extract solution of such tea or a flavor ingredient of such tea. The dried product of extract solution of such tea and the flavor ingredient maybe used in combination. The total amount of the tea extract and/or flavor ingredient may be preferably from 0.1 to 10.0 wt%, more preferably from 0.5 to 5.0 wt% based on the total weight of the instant beverage powder.

Tea leaves, which can be used as a starting material for a black tea extract usable in the instant black-tea beverage powder according to the present invention, are fermented tea leaves, and can be black tea leaves, pu-erh tea leaves or the like manufactured through a fermentation step from tea leaves obtained from tea leaves of the Genus Camellia, for example, *C. sinensis, C. assamica,* the Yabukita variety, or a hybrid thereof. The black tea extract can be obtained, for example, by extracting these tea leaves with water or hot water. On the other hand, tea leaves which can be used as a starting material for a oolong tea extract usable in the instant powder oolong-tea beverage according to the present invention are semi-fermented tea leaves, and can be oolong tea leaves manufactured through a fermentation step from tea leaves obtained from tea leaves of the Genus Camellia, for example, *C. sinensis, C. assamica,* the Yabukita variety, or a hybrid thereof. The oolong tea extract can be obtained, for example, by extracting these tea leaves with water or hot water. It is to be noted that tea leaves, which can be used as a starting material for a green tea extract usable in the instant powder green-tea beverage according to the present invention, are as described above.
Examples of a production method of a flavor ingredient include a membrane concentration method that conducts reverse osmosis concentration by using a semi-permeable membrane and a reduced-pressure distillation method making use of an injection of steam, in which while heating with the injection of steam under reduced pressure, flushing is conducted to produce steam with the flavor ingredient contained therein and the steam is then recovered to obtain the flavor.

To the instant beverage powder according to the present invention, acids other than the above-described ingredient (B), fruit extracts obtained from natural sources, and the like may be added as sour seasonings. They can be added either singly or in combination. Examples of such other acids include adipic acid, succinic acid, fumaric acid, benzoic acid, and phosphoric acid. They may be in the forms of acids, and for example, sodium fumarate, sodium benzoate, diammonium hydrogenphosphate, ammonium dihydrogenphosphate, dipotassium hydrogenphosphate, disodium hydrogenphosphate, sodium dihydrogenphosphate, trisodium metaphosphate, tripotassium phosphate and the like can be suitably used.
These sour seasonings may be added preferably at from 0.01 to 1.0 wt%, more preferably at from 0.02 to 0.5 wt% in the instant beverage powder according to the present invention.

To the instant beverage powder according to the present invention, alkali metal hydrogencarbonates and alkali metal carbonates can be added as an ingredient (C). They may be added either singly or in combination. As alkali metals, sodium and potassium are preferred. The alkali metal hydrogencarbonates and alkali metal carbonates include sodium hydrogencarbonate, sodium carbonate, potassium hydrogencarbonate, and potassium carbonate, with sodium hydrogencarbonate being preferred for the availability of optimal flavor and taste. The alkali metal hydrogencarbonates and alkali metal carbonates can function as pH adjusters. The total amount of an alkali metal hydrogencarbonate and alkali metal carbonate to be added to sufficiently exhibit their functions as pH adj usters maybe preferably 0.1 wt% or more, more preferably 0.2 wt% or more, even more preferably 0.5 wt% or more, based on the total weight of the instant beverage powder.

Further, the alkali metal hydrogencarbonates and alkali metal carbonates can also exhibit bubbling functions by adjusting their amounts. The total amount of an alkali metal hydrogencarbonate and alkali metal carbonate to be added may be preferably 2 wt% or more, more preferably 5.0 wt% or more, even more preferably 10.0 wt% or more, based on the total weight of the instant beverage powder. This total amount makes it possible to conveniently prepare an instant powder carbonated beverage. From the viewpoint of a pH adjustment for obtaining optimal sourness, it is desired to set the upper limit of the above-described total amount at 40.0 wt%, with 30.0 wt% being more desired, and 20.0 wt% being even more desired.

To the instant beverage powder according to the present invention, a carbohydrate can be added as an ingredient (D). However, its addition in an unduly small amount can impart substantially no sweetness, thereby making it difficult to balance sourness with saltiness. It is, therefore, preferred that, when the instant beverage powder is diluted with deionized water into a reconstituted beverage such that the concentration of non-polymer catechins becomes 0.13 wt%, the degree of the sweetness of the thus-reconstituted beverage may preferably be 2 or greater when sucrose is assumed to have a sweetness degree of 1 (References: JIS Z8144, SensoryAssessmentAnalysis-Terms, No. 3011, Sweetness; JIS Z9080, Sensory Assessment Analysis-Methods, Testing Method; Beverage Term Dictionary, 4-2 Classification of Sweetness Degrees, Material 11 (Beverage Japan, Inc.); Property Grading Test mAG Test, ISO 6564-1985(E), "Sensory Analysis - Methodology-Flavour profile method", etc.). When the degree of sweetness is 8 or smaller, on the other hand, it is possible to reduce a feeling of being caught in the throat that would be caused by the sweetness, and hence to leave an excellent feeling as the beverage passes down through the throat. It is, therefore, preferred to control the degree of sweetness at 8 or smaller. It is to be noted that such a carbohydrate include those originated from the tea extract. The amount of the carbohydrate (D) to be added may be preferably from 60 to 95 wt%, more preferably from 70 to 95 wt%, even more preferably from 70 to 92 wt% based on the total weight of the instant beverage powder.

The carbohydrate shall can be a monosaccharide, complex polysaccharide, oligosaccharide, sugar alcohol, or a mixture thereof. Examples of the monosaccharide include tetroses, pentoses, hexoses and ketohexoses. The hexoses can be, for example, aldohexoses such as glucose known as grape sugar. Fructose known as a fruit sugar is a ketohexose. The addition of such a carbohydrate in a large amount, however, causes a discoloration due to browning. Usable examples of the monosaccharide include mixed monosaccharides such as corn syrup, high-fructose corn syrup, fructoglucose syrup, glucofructose syrup, agape extract and honey. A preferred example of the complex polysaccharide is maltodextrin. In addition, polyhydric alcohols, for example, glycerols can also be used in the present invention.

As the carbohydrate, a nonreducing sugar or sugar alcohol is preferred to provide the non-polymer catechins with improved storage stability and to obtain optimal sweetness. Such nonreducing sugar and sugar alcohol can also be used in combination. As nonreducing sugars, oligosaccharides can be mentioned, including disaccharides such as sucrose, maltose, lactose, cellobiose and trehalose, trisaccharides such as raffinose, panose, melezitose and gentianose, and tetrasaccharides such as stachyose. Among these oligosaccharides, the important type are disaccharides, typical examples of which are saccharose available from sugarcane or sugar beet and sucrose known as beet sugar. Usable commercial products include granulated sugar, processed sugar, liquid sugar, sugarcanes, maple syrup and the like, all of which are refined sugars.

As the carbohydrate, a sugar alcohol may more preferred from the viewpoint of calories. As sugar alcohols, erythritol, sorbitol, xylitol, maltitol, lactitol, palatinose, mannitol, tagatose and the like can be used preferably. Among these carbohydrates, erythritol is most suitable as it is small in calorific value and can be added in a largest amount.

To the instant beverage powder according to the present invention, a natural sweetener or artificial sweetener other than the above-described carbohydrates can be added further. Its amount to be added into the instant beverage powder may be preferably from 0.0001 to 5.0 wt%, more preferably from 0.001 to 2.0 wt%, even more preferably from 0.001 to 1.0 wt%. Examples of the artificial sweetener include high-sweetness sweeteners such as aspartame, sucralose, saccharin, cyclamate, acesulfame-K, L-aspartyl-L-phenylalanine lower alkyl ester sweetener, L-aspartyl-D-alanine amide, L-aspartyl-D-serine amide, L-aspartyl-hydroxymethylalkanamide sweetener, L-aspartyl-1-hydroxyethylalkanamide sweetener; and thaumatin, glycyrrhizin, and synthetic alkoxyaromatic compounds. Further, stevioside and other natural-source sweeteners are also usable.

To the instant beverage powder according to the present invention, at least one powder flavoring (flavor) or fruit extract (fruit juice) (E) can be added to improve its taste. As specific examples, natural or synthetic flavorings and fruit extracts can be mentioned. They can be selected from fruit juices, fruit flavors, plant flavors, and mixtures thereof. As fruit extracts, apple, pear, lemon, lime, mandarin, grapefruit, cranberry, orange, strawberry, grape, kiwi, pineapple, passion fruit, mango, guava, raspberry, and cherry juices can be used. Among these, preferred are citrus juices (preferably, grapefruit, orange, lemon, lime and mandarin), mango juice and passion fruit juice. A mixture of two or more of these juices is more preferred.

Preferred natural flavors include jasmine, chamomile, rose, peppermint, *Crataegus cuneata,* chrysanthemum, water caltrop, sugarcane, bracket fungus of the genus Fomes (*Fomes japonicus*), bamboo shoot, and the like. More preferred powder flavorings include a citrus flavor containing orange flavor, lemon flavor, lime flavor and grapefruit flavor. In combination with a citrus flavor, one or more other fruit flavors such as apple flavor, grape flavor, raspberry flavor, cranberry flavor, cherry flavor and pineapple flavor can be used. These flavors can be derived from natural sources such as fruit extracts and balms, or can be synthesized. The powder flavorings can also include blends of various flavors, for example, a blend of lemon and lime flavors and blends of citrus flavors and selected spices (typically, cola and soft drink flavors).
The total amount of at least one powder flavoring or fruit extract to be added may be preferably from 1.0 to 10.0 wt%, more preferably from 0.5 to 5.0 wt% based on the total amount of the instant beverage powder.

To the instant beverage powder according to the present invention, a herb extract (F) can be added to improve its taste and health-related functions. The term "herb extract" means an extract of a herb such as a medicinal herb or sweet herb. Suited as herbs include, for example, chamomile, lemon verbena, hibiscus, rose, lemon grass, lemon balm, marrow, lavender, rosemary, thyme, linden, sage, juniper, basil, allspice, jasmine, cinnamon, fennel, malva sylvestris, masai, laurel, chicory, stevia, juniper berry, mint, hyssop, dandelion, orange flower, corn flower, alfalfa, clove, elder, caraway, sunflower, sweet violet, oregano, dandelion, marjoram, savory, turmeric, roselle, meadowsweet, marshmallow, marigold, wild strawberry, yarrow, orange blossom, eucalyptus, serpyllum, vanilla beans, orange peels, lemonpeels, applepeels, limepeels, and geranium. They may be used singly, but preferably, two or more herbs may be mixed and used. Depending on the kind of a herb, it has sweetness, strong sourness or strong bitterness. A suitable combination of two or more herbs makes it possible to achieve a balance in taste so that a mild and palatable instant beverage powder can be formulated. When two or more herbs are mixed, preferred combinations include, for example, combinations of chamomile and peppermint, hibiscus and rose, lemon grass and lemon balm, marrow blue and hibiscus, lavender and rose, rosemary and thyme, linden and peppermint, sage andlemonbalm, juniper and chamomile, basil and allspice, jasmine and thyme, thyme and peppermint, chamomile and cinnamon, fennel and hibiscus, malva sylvestris and chamomile, masai and rosehip, chicory and hibiscus, stevia and peppermint, juniper berry and mint, and hyssop and mint, and the mixing ratio varies depending on the kind of herbs to be mixed together. A part to be used varies depending on the kind of each herb, including flowers, leaves, fruits, roots, skins, stems, seeds, whole weed, or the like. The amount of the herb extract to be added may be preferably from 1.0 to 10.0 wt%, more preferably from 0.5 to 5.0 wt% based on the total weight of the instant beverage powder.

To the instant beverage powder according to the present invention, sodium and potassium can be added. Their total amount to be added may preferably be from 0.001 to 10.0 wt% based on the total weight of the instant beverage powder.

As the sodium, a readily-available sodium salt such as sodium chloride like common salt or a mixture of sodium salts may be added in addition to a sodium salt used in the above-described sour seasoning and/or pH adj uster, and the sodium includes that originated from an added fruit extract or that originated from one or more ingredients in tea. The higher the concentration of sodium, the higher the degree of discoloration of the beverage. From the viewpoint of stability, the amount of sodium to be added may be preferably from 0.001 to 5.0 wt%, more preferably from 0.002 to 2.0 wt%, even more preferably from 0.003 to 1.0 wt% based on the total weight of the instant beverage powder.

As the potassium, a potassium salt such as potassium chloride, potassium sulfate or potassium sorbate or a mixture thereof may be added in addition to a potassium salt used in the above-described sour seasoning and/or pH adjuster, and the potassium includes that originated from an added fruit extract or that originated from one or more ingredients in tea. The concentration of potassium affects more the color tone during long-term high-temperature storage than the concentration of sodium. From the viewpoint of stability, the amount of potassium to be added may be preferably from 0.001 to 2.0 wt%, more preferably from 0.002 to 1.0 wt%, even more preferably from 0.003 to 0.5 wt% based on the total weight of the instant beverage powder.

To the instant beverage powder according to the present invention, minerals other than sodium or potassium can be added. Preferredminerals are calcium, chromium, copper, fluorine, iodine, iron, magnesium, manganese, phosphorus, selenium, silicon, molybdenum, and zinc. More preferred minerals are magnesium, phosphorus and iron. These minerals can each be added preferably in an amount of at least 10 wt% of its daily requirement (U.S. RDI Standards, described in US 2005/0003068: U.S. Reference Daily Intake) per intake of the instant beverage powder.

To the instant beverage powder according to the present invention, one or more vitamins can be added further. Preferably, vitamin A, vitamin B and vitamin E can be added. Other vitamins such as vitamin D may also be added. Vitamin B includes a vitamin B complex selected from inositol, thiamine hydrochloride, thiamine nitrate, riboflavin, riboflavin 5'-phosphate sodium, niacin, nicotinamide, calcium pantothenate, pyridoxy hydrochloride, cyanocobalamin, folic acid and biotin. These vitamins can each be added preferably in an amount of at least 10 wt% of its daily requirement (U.S. RDI Standards, described in US 2005/0003068: U.S. Reference Daily Intake) per intake of the instant beverage powder.

To the instant beverage powder according to the present invention, additives such as antioxidants, various esters, organic acids, organic acid salts, inorganic salts, colors, emulsifiers, preservatives, seasoning agents, vegetable extracts, flower honey extracts and quality stabilizers may be mixed either singly or in combination depending on ingredients originated from tea.

When the instant beverage powder according to the present invention is diluted with deionized water such that the concentration of non-polymer catechins is adjusted to 0.13 wt% which is a concentration suited for drinking, the absorbance at 450 nm may preferably be 0.15 or lower. This absorbance can lead to an adequate color tone, and can provide a good external appearance. The more preferred absorbance is from 0.01 to 0.15, with from 0.01 to 0.12 being even more preferred.

The instant beverage powder according to the present invention may preferably give a pH (25°C) in a range of from 2.5 to 6.0 when diluted with deionized water such that the concentration of non-polymer catechins is adjusted to 0.13 wt% which is a concentration suited for drinking. From the viewpoints of flavor, taste and color tone, such a pH may be preferably from 2.8 to 5.0, more preferably from 3.0 to 4.7, even more preferably from 3 . 8 to 4.5. By controlling the pH within such a range, adequate sourness can be obtained. The pH can be adjusted to the above-described range by adding an organic acid such as ascorbic acid or citric acid, sodium hydrogencarbonate, sodium carbonate, potassium hydrogencarbonate, or potassium carbonate.

The instant beverage powder according to the present invention may contain solids preferably at 90.0 wt% or higher, more preferably at 95.0 wt% or higher, even more preferably at 98.0 wt% or higher from the viewpoints of preventing caking due to absorption of moisture and handling.

From the viewpoints of the non-disintegrativeness of granules and the solubilityupon drinking, the instant beverage powder according to the present invention may have a bulk density (g/cm³) in a range of preferably from 0.2 to 0.6, more preferably from 0.4 to 0.6. It is to be noted that the bulk density is a value as measured by a bulk densimeter in accordance with the Japan Industrial Standards JIS K6721.

A description will next be made about the production process of the instant beverage powder according to the present invention.
Firstly, a purified product of green tea extract is prepared. The purified product of green tea extract is prepared by a similar method as described above. The purified product is next granulated into a powder. The granulation may be conducted by either a dry method or a wet method, but for obtaining a particle size suited for dissolution in water or another drinking medium, wet granulation that granulates by using the adhesive force of water or a binder is preferred. Examples of preferred granulation methods include spray-drying granulation, freeze-drying granulation, fluidized bed granulation and tumbling granulation. The granulation can be conducted by using two or more of these granulation methods in combination.

In the present invention, a two-step granulation method that subsequent to the formation of a primary powder by spray drying or freeze drying, a secondary powder is formed by fluidizedbed granulation or tumbling granulation is preferred from the standpoints of providing the instant beverage powder with improved solubility and preventing caking. As drying temperatures in the respective granulation methods, it is possible to adopt, for example, from -50 to 50°C for freeze-drying, from 50°C to 120°C for spray-drying, from 20 to 50°C for fluidized bed granulation, and from 20 to 60°C for tumbling granulation.

Spray-drying is a drying method that sprays a liquid material into a counter-current or parallel air flow to obtain spherical particles by transfer of heat and the material between liquid droplets and the air flow. Spray-drying is simple in steps, and therefore, is suited for continuous operation, mass production and quality control.

In freeze-drying, a liquid material is frozen at a low temperature, and subsequent to grinding, a small quality of heat is added under vacuum (4.6 Torr or lower) . At this time, ice is not converted into water but is allowed to sublimate as is, so that onlypowderparticles are left. The powder particles so obtained have not been exposed to heat of high temperature unlike spray drying, and therefore, have a merit that the flavor and taste are hardly impaired.

In fluidized bed granulation, continuous motion of individual material particles is ensured to fluidize the mixture into a sufficiently spread state. Then, a binder solution is sprayed into the fluidized bed and a heated air flow is caused to pass through the fluidized bed, so that the purified product of green tea extract is dried at the same time. The fluidization step is continued until the content of water in the purified product of green tea extract is lowered to from 3 to 8 wt%, preferably to approx. 5 wt% or lower. The granulated product obtained by this granulation method is porous and readily soluble, and is predominantly spherical in shape.

Tumbling granulation is a method that conducts granulation by feeding a powder and also adding an appropriate amount of a liquid binder into a cylindrical vessel tilted at from 40 to 50° and rotating at from 10 to 30 rpm. The ingredients are allowed to grow into particles while being tumbled, so that a granulated product having a somewhat broad particle size distribution is obtained. Tumbling granulation may additionally require a drying step, because water may remain in some instances.

In the above-described manner, it is possible to obtain a powder of the purified product of green tea extract, the average particle size of which may be preferably 5,000 µm or smaller, more preferably 2,000 µm or smaller. The formation into such a fine powder makes it possible to conveniently prepare a reconstituted beverage with non-polymer catechins dissolved at high concentration therein. It is to be noted that the term "average particle size" as used herein means a value as measured in accordance with the sieving test method in JIS Z8801 Testing Sieves or JIS K0069 Chemical Products.

The addition of the ingredient (B) can be conducted before powderizing the purified product of green tea extract or after powderizing the purified product of green tea extract. By mixing the purified product of green tea extract and the ingredient (B) in predetermined amounts, the instant beverage powder according to the present invention can be conveniently obtained. For mixing these ingredients, a known mixer can be used.

Upon reconstituting the instant beverage powder of the present invention into a beverage, for example, the instant beverage powder in a packaged form may be measured in spoons to prepare the reconstituted beverage, but tiny stick-type packs are preferred in that cups of a reconstituted beverage can be conveniently prepared. Similar to general beverage powders or powder foods, the instant beverage powder according to the present invention can also be wrapped with a wrapping material such as an aluminum evaporated film. Nitrogen gas may be filled in the sealing container, and as the wrapping material, one having low oxygen permeability is preferred from the standpoint of maintaining the quality of the instant beverage powder.

The instant beverage powder according to the present invention is diluted into a reconstituted beverage with deionized water, carbonated water, a milky beverage or the like. The reconstituted beverage can be stored not only under refrigeration but also at room temperature owing to its excellent storage stability.

The instant beverage powder according to the present invention can be taken by dissolving it in water or hot water, and can also be used in biscuits such as cookies, crackers and biscuits; short breads, chocolates and chocolate coating materials; and supplements such as tables and granules. The amounts of the instant beverage powder in these foods vary depending on the kinds of the foods, but in general, may be preferably from 1 to 70 wt%, more preferably from 5 to 50 wt%.

### Examples

### (Measurements of non-polymer catechins)

After a sample was diluted to 100 g with deionized water, the diluted sample was filtered through a membrane filter (0.8 µm), and then diluted with distilled water. Using a high-performance liquid chromatograph (model: "SCL-10AVP") manufactured by Shimadzu Corporation, a liquid chromatograph column packed with octadecyl-introduced silica gel, "L-Column, TM ODS" (4.6 mm in diameter x 250 mm; product of Chemicals Evaluation and Research Institute, Japan) was fitted. The sample diluted with the distilled water was measured at a column temperature of 35°C by the gradient elution method. A mobile phase, Solution A, was a solution containing acetic acid at 0.1 mol/L in distilled water, while another mobile phase, Solution B, was a solution containing acetic acid at 0.1 mol/L in acetonitrile. The measurement was conducted under the conditions of 20 µL sample injection volume and 280 nm UV detector wavelength. After the measurements, the concentrations (wt%) of non-polymer catechins were determined by conducting conversions based on the dilution rate.

Concentration gradient conditions (vol%)

| Time | Mobile phase A | Mobile phase B |
|---|---|---|
| 0 min | 97% | 3% |
| 5 min | 97% | 3% |
| 37 min | 80% | 20% |
| 43 min | 80% | 20% |
| 43.5 min | 0% | 100% |
| 48.5 min | 0% | 100% |
| 49 min | 97% | 3% |
| 62 min | 97% | 3% |

### (Measurement of caffeine)

### (1) Analytical equipment

An HPLC system (manufactured by Hitachi, Ltd.) was used.
Plotter: "D-2500", Detector: "L-4200",
Pump: "L-7100", Autosampler: "L-7200",
Column: "Inertsil ODS-2" (2.1 mm inner diameter x 250 mm length).

### (2) Analytical conditions

Injected sample quantity: 10 µL
Flow rate: 1.0 mL/min
Detection wavelength of UV absorptiometer: 280 nm
Eluent A: 0.1 M solution of acetic acid in water
Eluent B : 0.1 M solution of acetic acid in acetonitrile Concentration gradient conditions (vol%) were the same as described above.

### (3) Retention time of caffeine

Caffeine: 27.2 minutes
From each area % determined here, the corresponding wt.% was determined based on the standard substance.

### (Assessment of taste and flavor)

With respect to a reconstituted beverage prepared by diluting each instant beverage powder with deionized water to lower the concentration of non-polymer catechins to 0.13 wt%, a drinking test was performed by a panel of five trained assessors.
In the drinking test, each trained assessor drank the reconstituted beverage, and respectively accessed its "bitterness", "astringency", "balance between sweetness and sourness" and "refreshing attributes", in accordance with the below-described standards. Subsequently, final scores were determined at intervals of 0.5 after deliberation. Further, each trained assessor assessed, in accordance with the below-described standards, its "flavor and taste upon elapsed time of 4 hours after the dilution" and "external appearance upon elapsed time of 4 hours after the dilution" as compared with the corresponding properties shortly after the dilution in deionized water. Subsequently, final assessments were made after deliberation.

### (Assessment standards for bitterness)

1: Substantially no bitterness
2: Fairly weak bitterness
3: Slightly intense bitterness
4: Intense bitterness

### (Assessment standards for astringency)

1: Substantially no astringency
2: Fairly weak astringency
3: Slightly intense astringency
4: Intense astringency

### (Assessment standards for the balance between sweetness and sourness)

1: Very good balance between sweetness and sourness
2: Good balance between sweetness and sourness
3 : Slightly poor balance between sweetness and sourness
4: Poor balance between sweetness and sourness

### (Assessment standards for refreshing attributes)

1: Good refreshing attributes
2: Fairly good refreshing attributes
3: Slightly-reduced refreshing attributes
4: No refreshing attributes

### (Assessment standards for flavor and taste upon elapsed time of 4 hours after dilution)

A: No change in flavor and taste
B: An oxidation degradation smell is recognized.
C: An oxidation degradation smell is significant.

### (Assessment standards for external appearance upon elapsed time of 4 hours after dilution)

A: No change in external appearance
B: Precipitates are observed.
C: The occurrence of precipitates is significant.

### Example 1

### [Purified product of green tea extract]

A commercial concentrate (1,000 g) of green tea extract ("POLYPHENONE HG", Mitsui Norin Co., Ltd.) was suspended in a 95 wt% aqueous solution of ethanol (9,000 g) under stirring conditions of room temperature and 200r/min. After activated carbon ("KURARAY COAL GLC", product of Kuraray Chemical K.K.; 200 g) and acid clay ("MIZKA ACE #600", product of Mizusawa Chemical Industries, Ltd.; 500 g) were charged, the resulting mixture was continuously stirred for about 10 minutes. Still at room temperature, stirring was then continued for about 30 minutes. After the activated carbon, acid clay and precipitate were then filtered off by a No. 2 filter paper disk, the filtrate was filtered again through a 0.2 µm membrane filter. Finally, deionized water (200 g) was added to the filtrate, ethanol was distilled off at 40°C and 3.3 kPa to achieve reduced-pressure concentration. An aliquot (750 g) of the concentrate was placed in a stainless steel vessel, the total amount was brought to 10,000 g with deionized water, and then, a 5 wt% aqueous solution of sodium bicarbonate (30 g) was added to adjust its pH to 5.5. Under stirring conditions of 22°C and 150 r/min, a solution of "KIKKOMAN TANNASE KTFH" (Industrial Grade, 500 U/g minimum, product of Kikkoman Corporation; 2.7 g) dissolved in deionized water (10.7g) was then added. Upon elapsed time of 55 minutes at which the pH had dropped to 4.24, the enzyme reaction was terminated. The stainless steel vessel was next immersed in a hot bath of 95°C, and was held at 90°C for 10 minutes to completely inactivate the enzyme activity. After the stainless steel vessel was next cooled to 25°C, concentration processing was conducted. Further, spray drying was conducted to obtain a purified product of green tea extract in the form of a primary powder. The purified product was charged into a pan-type dry granulator (inner diameter: 540 mm, depth: 373 mm, "DPZ-01", AS ONE Corporation) as a tumbling granulator, and granulation was conducted at 25°C, an inclination of 45° with respect to the horizon, and a tumbling speed of 22 rpm. Water was carefully sprayed into the pan-type dry granulator until uniform particles of from 0.1 to 0.5 mm in particle size were obtained as a granulated product. The particles were next taken out and dried for 4 hours in a reduced-pressure drier controlled at 25°C. Subsequently, a purified product of green tea extract (minus 22 mesh) was obtained.

### [Freeze dry product of green tea extract]

Middle-grade green tea leaves (400 g) were added into a hot water (10,000 g) heated at 90°C, and with gentle stirring, were extracted for 5 minutes. After the extraction, filtration was conducted through a No. 2 filter paper disk, and the filtrate was promptly cooled to room temperature. The green tea extract was centrifuged, and subsequent to concentration under reduced pressure, freeze drying was conducted.

### [Production of instant powder green-tea beverage]

Charged into a "V-TYPE MICROMIXER MODEL S-3" (manufactured by Tsutsui Scientific Instruments Co., Ltd.) were the purified product (39.1 g) of green tea extract, the freeze-dry product (19.6 g) of green tea extract, erythritol (146.7 g), fructose (754.6 g), ascorbic acid (9.8g), citric acid (19.6 g), and sodium hydrogencarbonate (10.6 g). By powder blending, an instant powder green-tea beverage was obtained. The composition of the instant powder green-tea beverage and the results of assessments of its flavor and taste are shown in Table 1.

### Example 2

An instant green-tea beverage powder was obtained by a similar procedure as in Example 1 except that malic acid was used in place of citric acid. The composition of the instant powder green-tea beverage and the results of assessments of its flavor and taste are shown in Table 1.

### Example 3

### [Freeze dry product of black tea extract]

Darjeeling black tea leaves (400 g) were added into a hot water (10,000 g) heated at 90°C, and with gentle stirring, were extracted for 3 minutes. After the extraction, filtration was conducted through two No. 2 filter paper disks stacked one over the other, and the filtrate was promptly cooled to room temperature. The extract solution was centrifuged, and subsequent to concentration under reduced pressure, freeze drying was conducted.

### [Production of instant powder black-tea beverage]

An instant black-tea beverage powder was obtained by a similar procedure as in Example 1 except for the use of the purified product (37.6 g) of green tea extract as obtained in Example 1, the freeze dry product (18.8 g) of black tea extract, erythritol (141.1 g), fructose (726.5 g), ascorbic acid (9.4g), citric acid (18.8 g), sodium hydrogencarbonate (10.2 g), a lemon powder flavoring (18.8 g) , and dried lemon peels (18.8 g). The composition of the instant powder black-tea beverage and the results of assessments of its flavor and taste are shown in Table 1.

### Example 4

An instant black-tea beverage powder was obtained by a similar procedure as in Example 3 except that malic acid was used in place of citric acid. The composition of the instant powder black-tea beverage and the results of assessments of its flavor and taste are shown in Table 1.

### Example 5

### [Freeze dry product of oolong tea extract]

Oolong tea leaves (400 g) were added into a hot water consisting of a 0.04 wt% aqueous solution of sodium bicarbonate (10,000g) and heated at 90°C, and with gentle stirring, were extracted for 5 minutes. After the extraction, filtration was conducted through two No. 2 filter paper disks stacked one over the other, and the filtrate was promptly cooled to room temperature. The extract was centrifuged, and subsequent to concentration under reduced pressure, freeze drying was conducted.

### [Production of instant powder oolong-tea beverage ]

An instant oolong-tea beverage powder was obtained by a similar procedure as in Example 1 except for the use of the purified product (39.3 g) of green tea extract as obtained in Example 1, the freeze dry product (19.7 g) of oolong tea extract, erythritol (147.4 g), fructose (758.8 g), ascorbic acid (9.8 g), citric acid (19.7 g), and sodium hydrogencarbonate (5.3 g). The composition of the instant powder oolong-tea beverage and the results of assessments of its flavor and taste are shown in Table 1.

### Example 6

An instant oolong-tea beverage powder was obtained by a similar procedure as in Example 5 except that malic acid was used in place of citric acid. The composition of the instant powder oolong-tea beverage and the results of assessments of its flavor and taste are shown in Table 1.

### Examples 7-13

### [Production of instant non-tea beverage powders]

An instant non-tea beverage powder of Example 7 was obtained by a similar procedure as in Example 1 except for the use of the purified product (38.4 g) of green tea extract as obtained in Example 1, erythritol (143.8 g), fructose (739.7 g), ascorbic acid (9.6 g), citric acid (19.7 g), sodium hydrogencarbonate (10.4 g), a citrus powder flavoring (19.2 g), and dried lime peels (19.2 g).

In Examples 8-13, instant powder non-tea beverage s were also obtained by a similar procedure as in Example 7 except that the adding ingredients and proportions were changed as shown in Table 1, respectively.

The compositions of the instant non-tea beverage powders obtained in Examples 7-13 and the results of assessments of their flavors and tastes are shown in Table 1.

### Example 14

### [Production of instant carbonated beverage powder]

An instant carbonated beverage powder was obtained by a similar procedure as in Example 1 except for the use of the purified product (32.5 g) of green tea extract as obtained in Example 1, erythritol (121.8 g), fructose (626.7 g), ascorbic acid (8.1 g), citric acid (16.2 g), sodium hydrogencarbonate (162.3 g), a citrus powder flavoring (16.2 g), and dried lime peels (16.2 g). The composition of the instant powder carbonated beverage and the results of assessments of its flavor and taste are shown in Table 1.

### Comparative Example 1

"POLYPHENONE HG" (product of Tokyo Food Techno Co., Ltd., 1,000 g) was dissolved in water (2,370 g), and into the aqueous solution of "POLYPHENONE HG", a 70 wt% aqueous solution of ethanol (6,630 g) was added dropwise over 30 minutes. The resultant mixture was then subjected to aging for 30 minutes under stirring. After the aging, the mixture was coarsely filtered through a No. 2 filter paper disk, and further filtered through a filter paper disk of 0.2 µm mesh to eliminate formed insolubles. To the resulting filtrate, water (200 mL) was added. After concentration under reduced pressure, the concentrate was subjected to freeze drying to obtain a purified product of green tea extract. By a similar procedure as in Example 1 except for the addition of cyclodextrin (0.4 g), an instant green-tea beverage powder was produced. The composition of the instant green-tea beverage powder and the results of assessments of its flavor and taste are shown in Table 2.

### Comparative Example 2

An instant black-tea beverage powder was produced by a similar procedure as in Example 3 except that the purified product of green tea extract as obtained in Comparative Example 1 was used and cyclodextrin (0.4 g) was added. The composition of the instant black-tea beverage powder and the results of assessments of its flavor and taste are shown in Table 2.

### Comparative Example 3

An instant non-tea beverage powder was produced as in Example 7 except that the purified product of green tea extract as obtained in Comparative Example 1 was used, cyclodextrin (0.4 g) was added, and the adding proportions were changed as shown in Table 1. The composition of the instant non-tea beverage powder and the results of assessments of its flavor and taste are shown in Table 2.

### Comparative Example 4

An instant non-tea beverage powder was produced by a similar procedure as in Comparative Example 3 except that no hydroxycarboxylic acid was used and the adding proportions were changed as shown in Table 1. The composition of the instant non-tea beverage powder and the results of assessments of its flavor and taste are shown in Table 2.

### Comparative Examples 5-6

Instant non-tea beverage powders were produced by a similar procedure as in Example 3 except that the purified product of green tea extract as obtained in Comparative Example 1 was used and the adding proportions were changed as shown in Table 1. The compositions of the instant non-tea beverage powders and the results of assessments of their flavors and tastes are shown in Table 2.

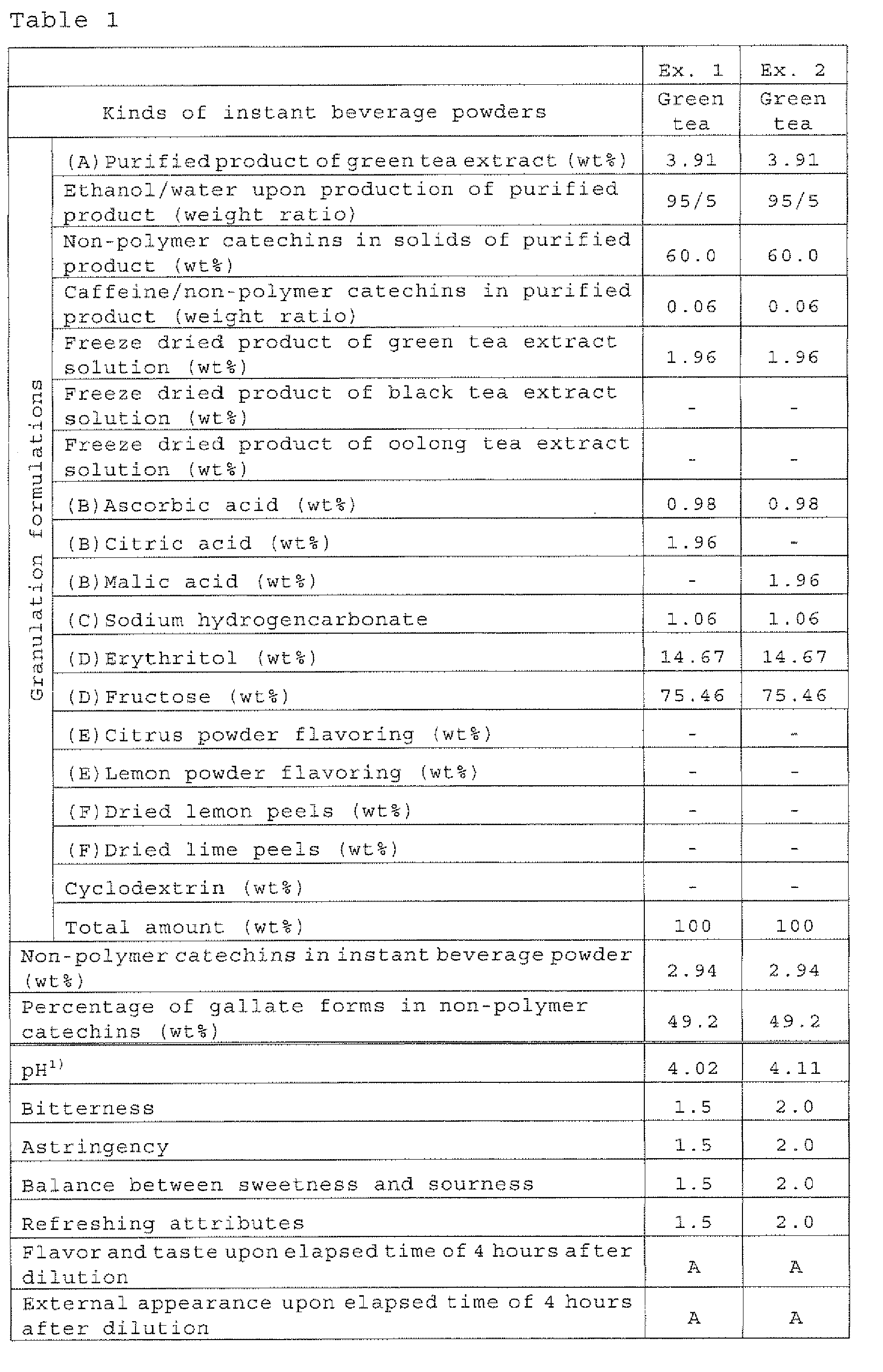

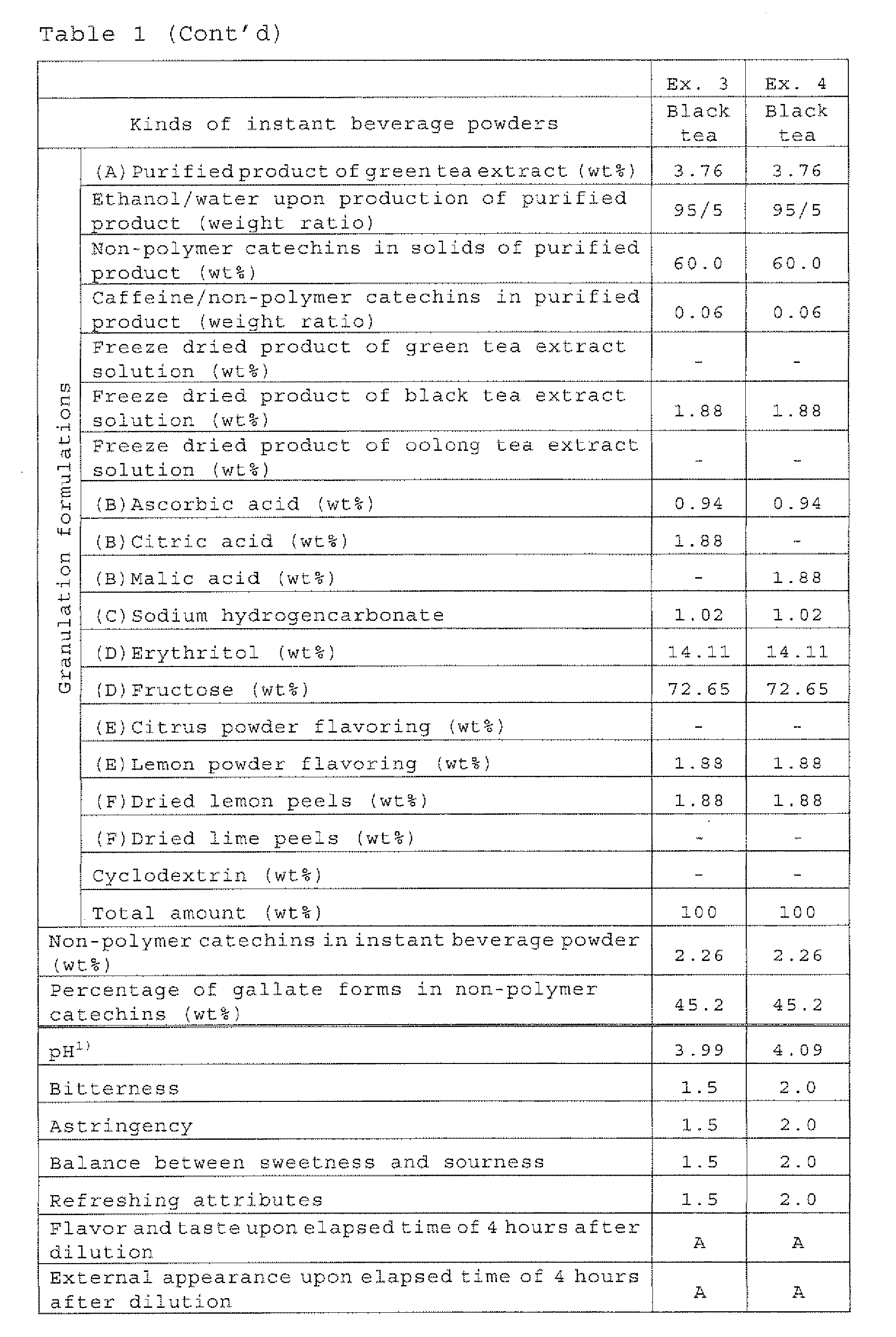

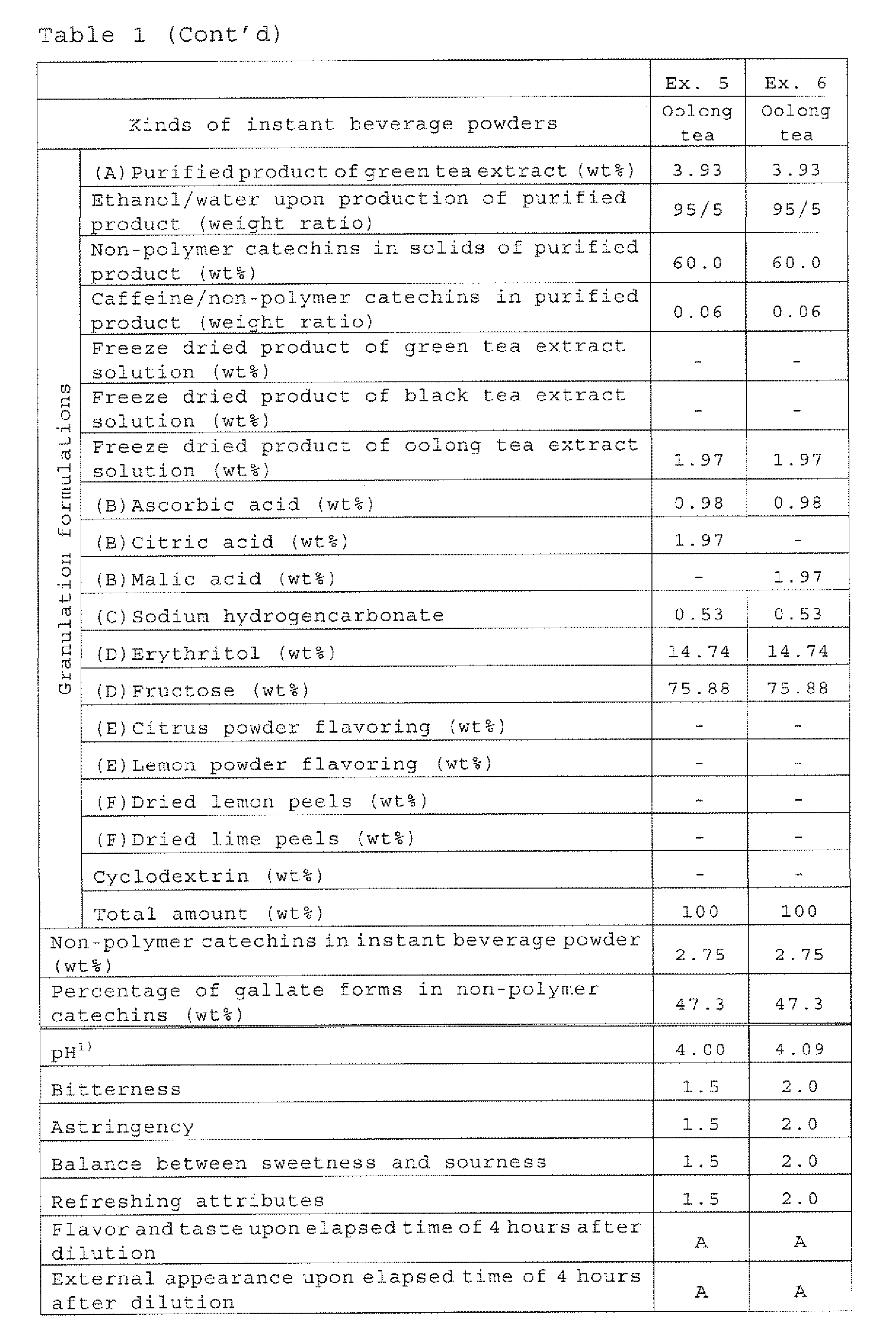

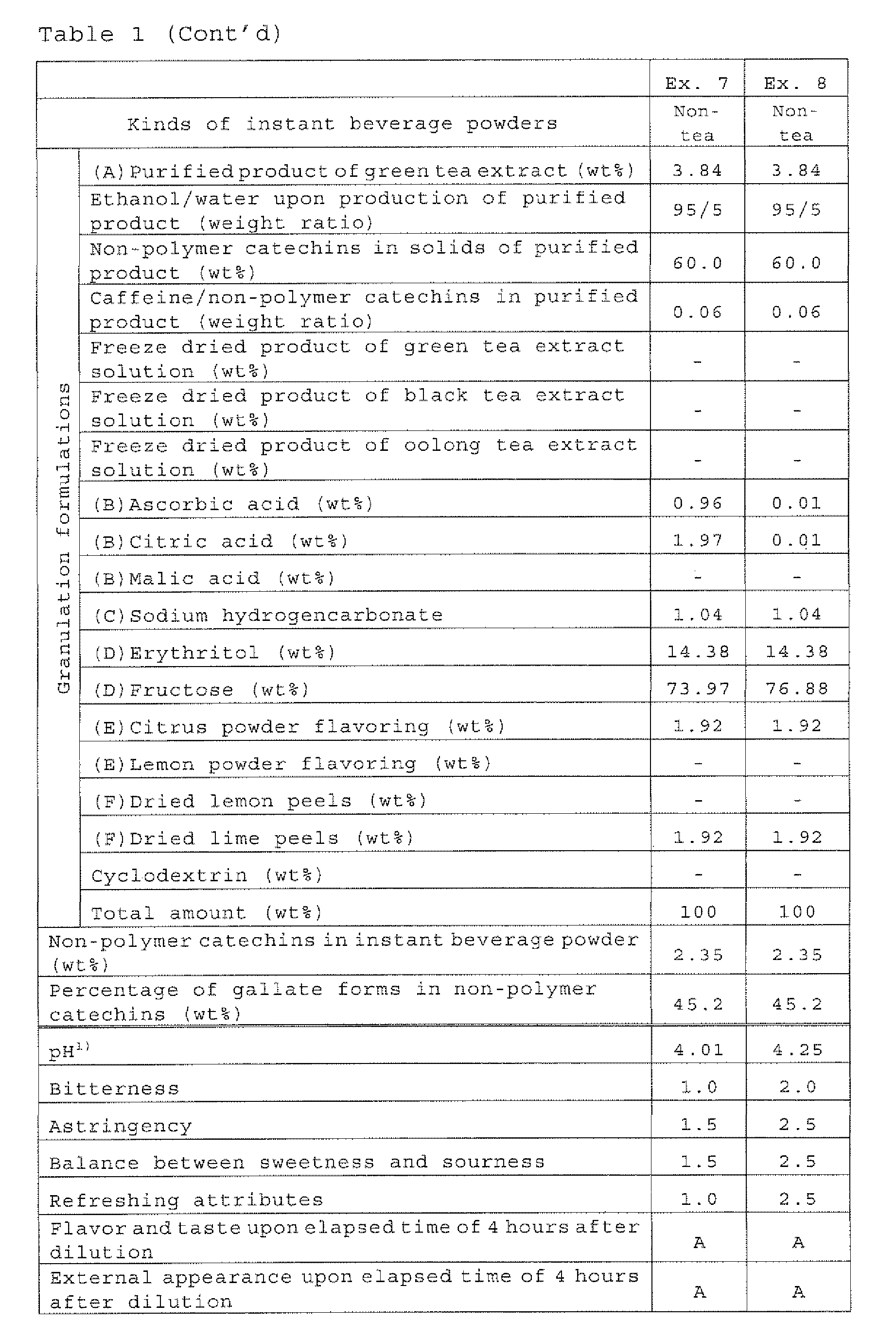

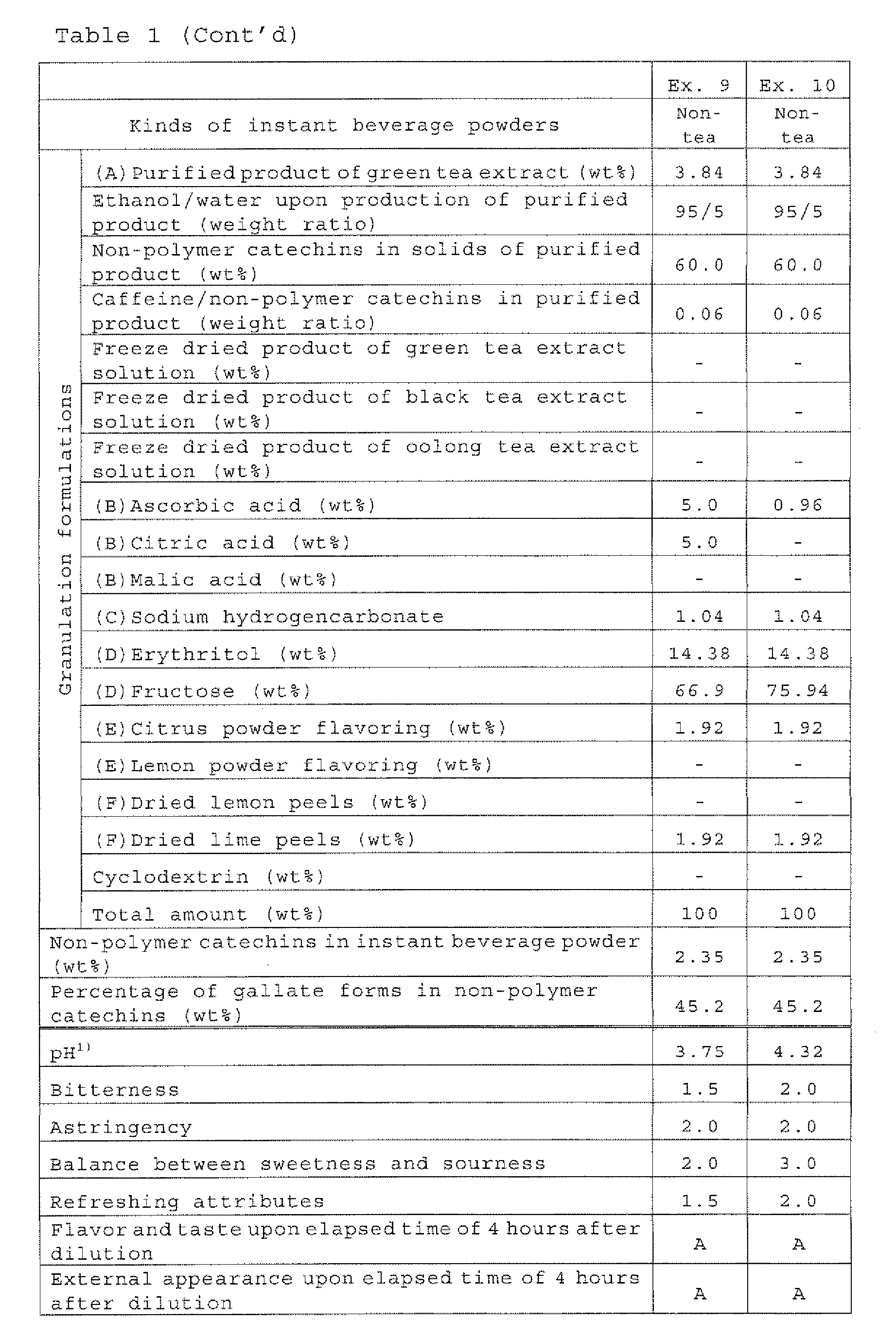

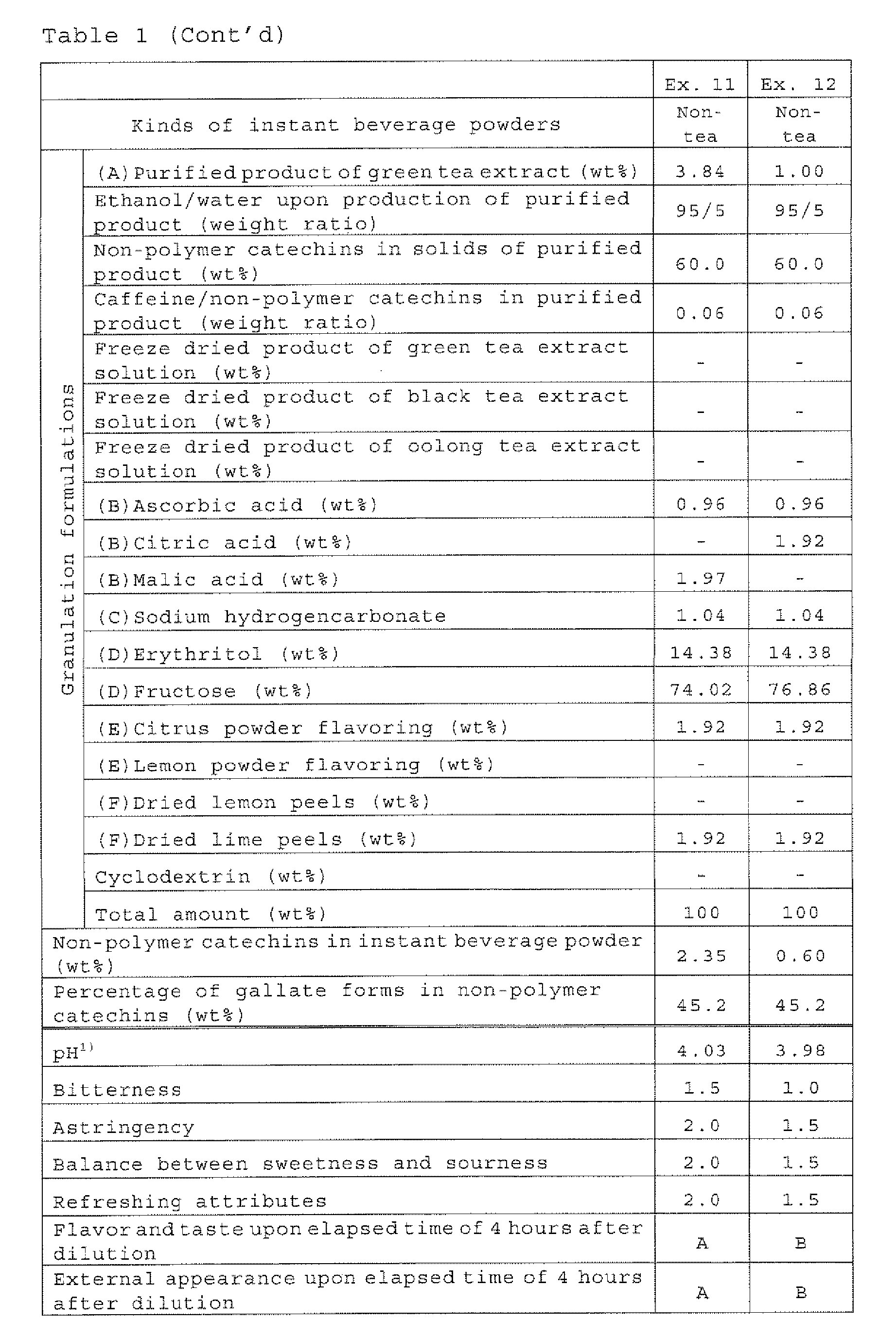

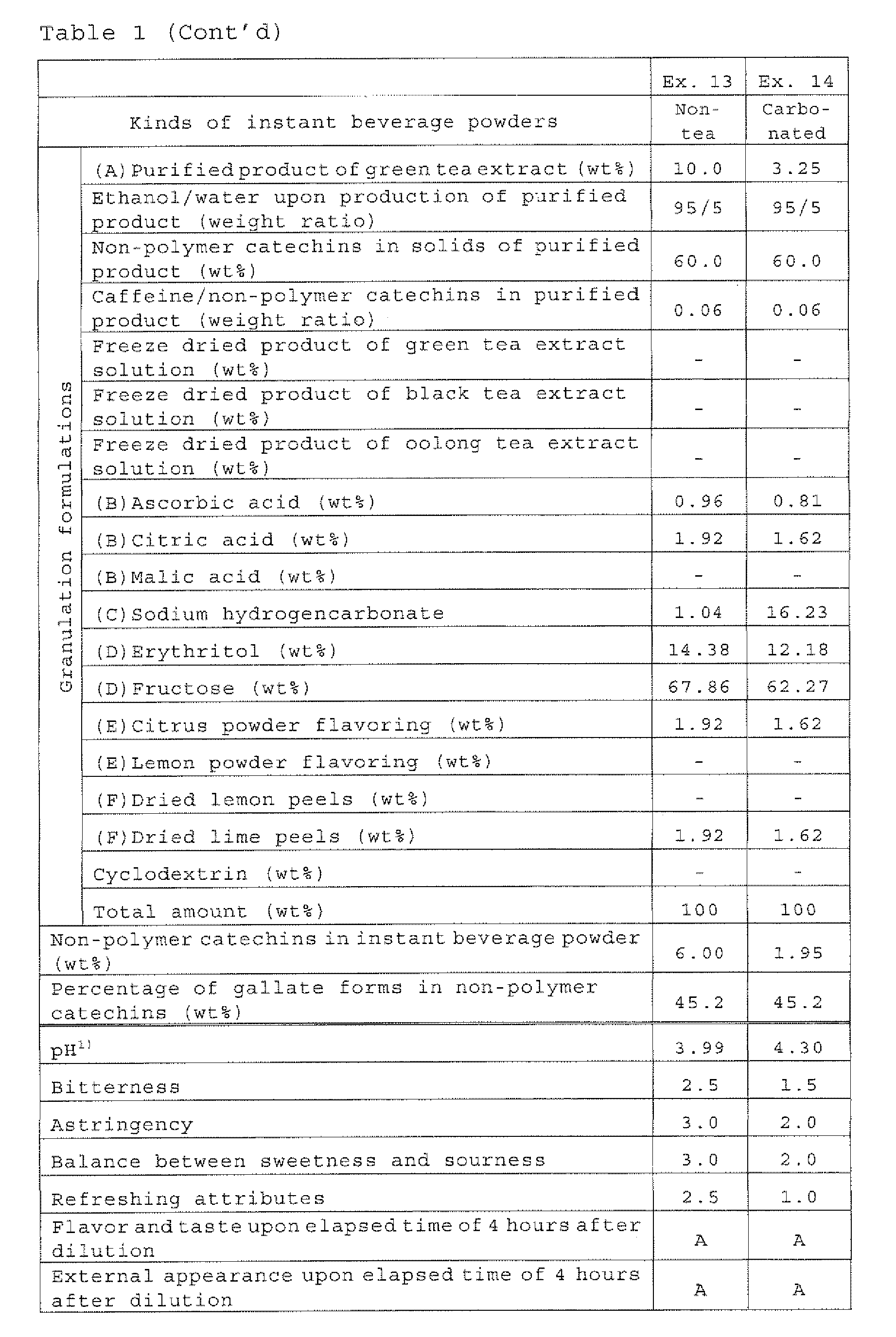

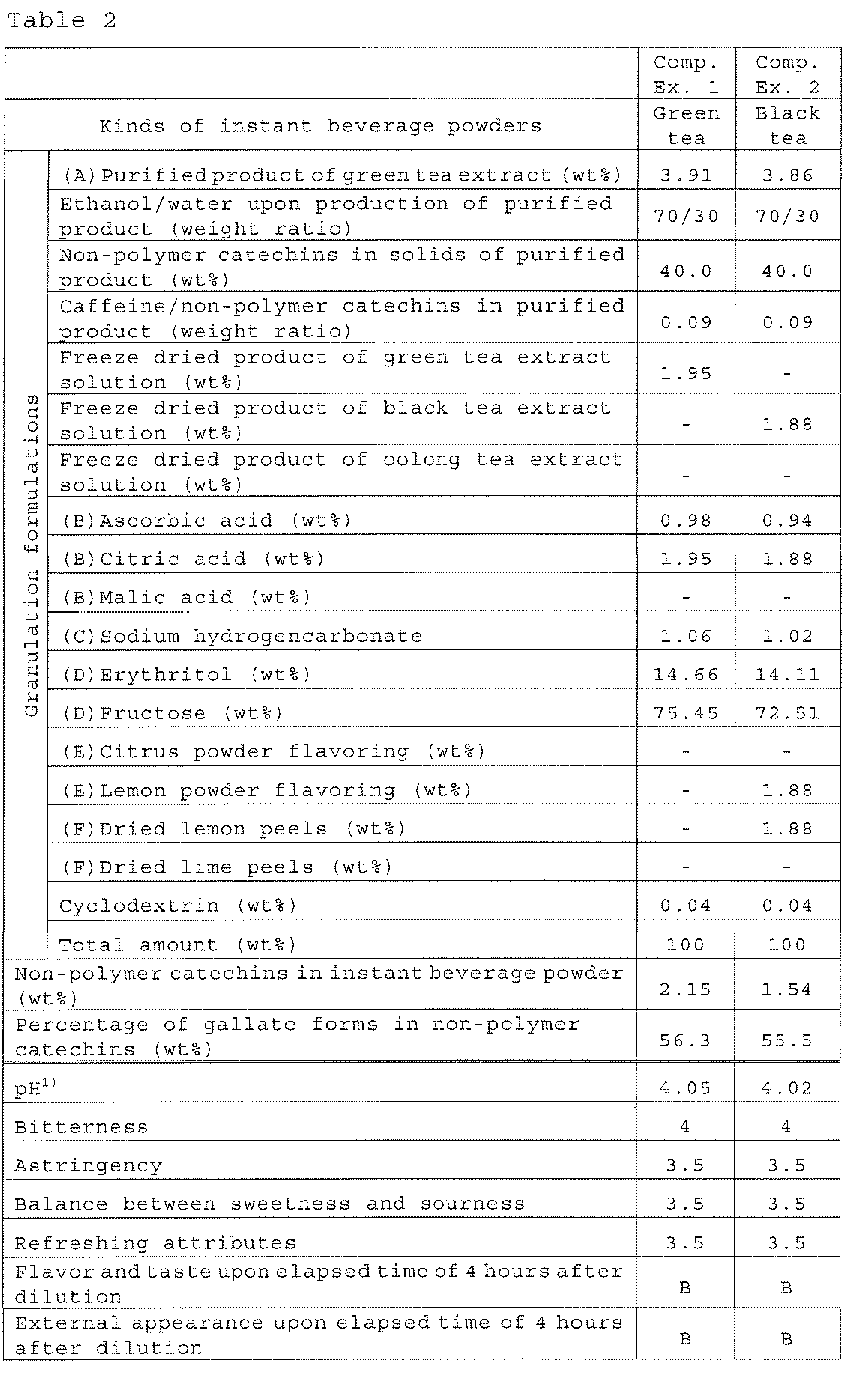

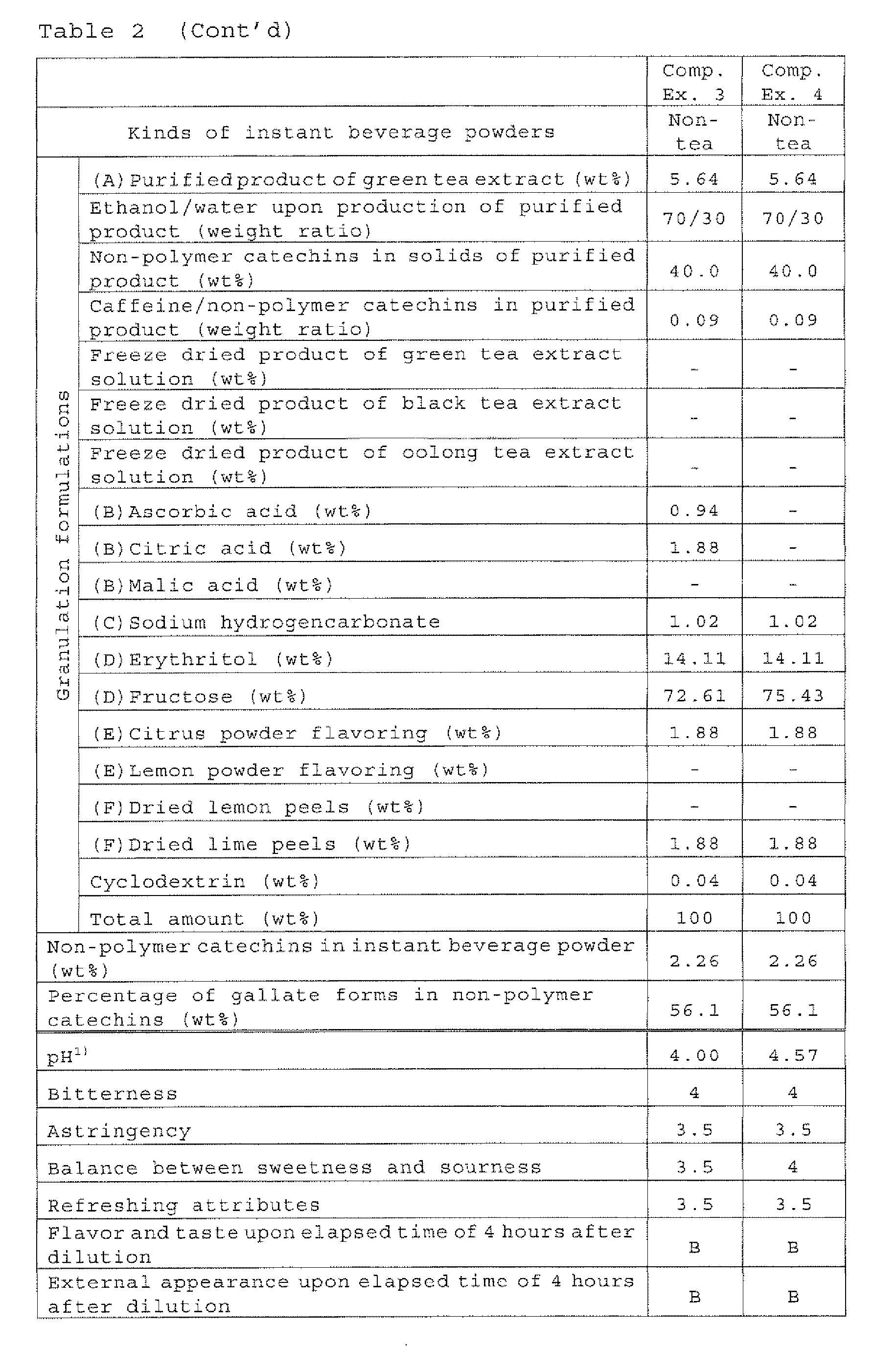

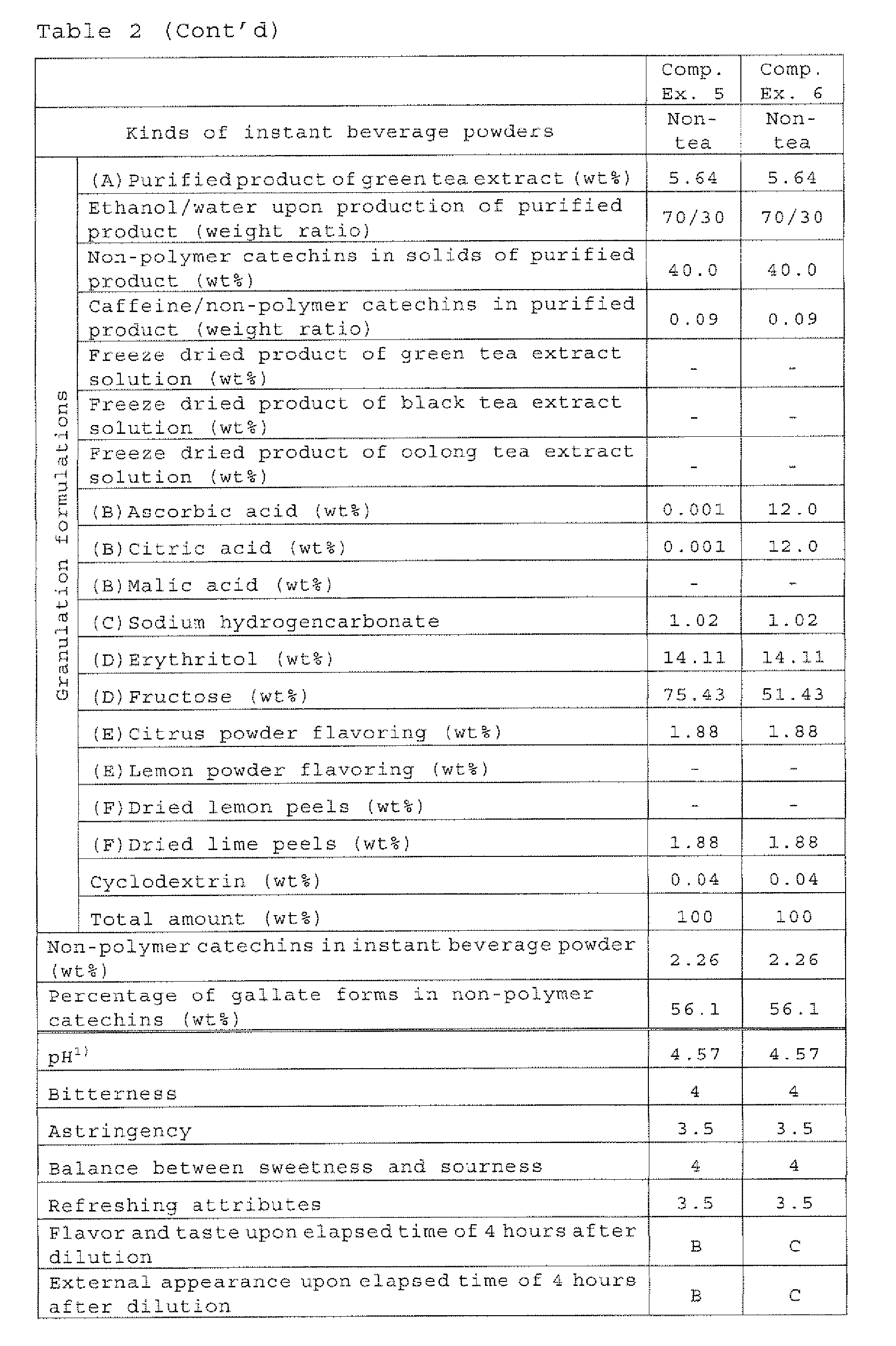

1) pH at 25°C upon dilution of the instant beverage powder with deionized water such that the concentration of non-polymer catechins was lowered to 0.13 wt%.

It is apparent from Table 1 that compared with Comparative Examples 1-6, the instant beverage powders of Examples 1-14 according to the present invention are reduced in bitterness and astringency, are excellent in the balance of sweetness and sourness and refreshing attributes, and can retain their flavors and tastes and external appearances over a long time even after reconstitution.

## Claims

1. An instant beverage powder comprising the following ingredients (A) and (B):
(A) from 0.5 to 20.0 wt% of a purified product of green tea extract, said purified product being obtained by purifying the green tea extract in a mixed solution of ethanol and water at a weight ratio of from 99/1 to 75/25, and
(B) from 0.01 to 10.0 wt% of a hydroxycarboxylic acid or a lactone or a salt thereof,
wherein from 0.5 to 15.0 wt% of non-polymer catechins are contained in the instant beverage powder.

2. The instant beverage powder according to claim 1, comprising a hydroxy monocarboxylic acid or a lactone thereof as the hydroxycarboxylic acid.

3. The instant beverage powder according to claim 2, further comprising a hydroxy polycarboxylic acid as the hydroxycarboxylic acid.

4. The instant beverage powder according to any one of claims 1-3, further comprising (C) 0.1 wt% or more of at least one of alkali metal salts selected from alkali metal hydrogencarbonates and alkali metal carbonates.

5. The instant beverage powder according to any one of claims 1-4, which is an instant green-tea beverage powder, an instant black-tea beverage powder, an instant oolong-tea beverage powdwe or an instant non-tea beverage powder.

6. The instant beverage powder according to any one of claims 1-3, further comprising (C) 2 wt% or more of at least one of alkali metal salts selected from alkali metal hydrogencarbonates and alkali metal carbonates,
wherein the instant beverage powder is an instant carbonated beverage powder.

7. The instant beverage powder according to any one of claims 1-6, wherein a percentage of gallate forms in the non-polymer catechins is from 5 to 55 wt%.

8. The instant beverage powder according to any one of claims 1-7, further comprising (D) a carbohydrate.

9. The instant beverage powder according to claim 8, wherein at least one of carbohydrates selected from non-reducing saccharides and sugar alcohols is contained as the carbohydrate.

10. The instant beverage powder according to claim 9, wherein the sugar alcohol is erythritol.

11. The instant beverage powder according to any one of claims 1-10, further comprising (E) at least one of flavorings or fruit extracts selected from powder flavorings and fruit extracts.

12. The instant beverage powder according to any one of claims 1-11, further comprising (F) a herb extract.

13. Aprocess for producing an instant beverage powder, which comprises a step of powderizing a purified product of green tea extract, said purified product obtained by purifying the green tea extract in a mixed solution of ethanol and water at a weight ratio of from 99/1 to 75/25, in accordance with at least one granulating method selected from spray-drying, freeze-drying, fluidized-bed granulation and tumbling granulation.
